# EUROPEAN PATENT SPECIFICATION

(11) **EP 3 575 006 B1**
(45) Date of publication and mention of the grant of the patent: **28.12.2022**
(21) Application number: 19182559.5
(22) Date of filing: 11.08.2017
(51) Int. Cl.: B07C 3/08, B65G 1/06, G06T 7/13, B61C 11/04, B07C 5/10, B07C 5/34, B65G 43/08, B65G 1/04, B65G 1/137

(54) **APPARATUS FOR SORTING ITEMS**
VORRICHTUNG ZUM SORTIEREN VON ARTIKELN
DISPOSITIF POUR LE TRI D'OBJETS

(30) Priority: 12.08.2016 US 201662374218 P
(43) Date of publication of application: 04.12.2019
(62) Divisional of application: 17755623.0
(73) Proprietor: Amazon Technologies, Inc., Seattle, WA 98108-1226 (US)
(72) Inventor: GARRETT, Samuel Gardner, Seattle WA 98109-5210 (US); DEWITT, Robert R., Marlton NJ 08053 (US); MCVAUGH, Monty, Mount Holly NJ 08060 (US); STEVENS, Alexander, Philadelphia PA 19147 (US); WALSH, James, Pittsford NY 14534 (US); WILSON, Gregory, Moorestown NJ 08057 (US)
(74) Representative: EIP

(56) References cited:
- WO-A1-01/10574
- AU-A1- 2014 216 046
- CA-A- 1 242 986
- US-B1- 6 264 042

## Description

### BACKGROUND

In conveyor or sorter systems, objects are generally transferred to or from a conveyor and/or from one conveyor to another (e.g., from a feed conveyor to a receiving conveyor). In many automated material handling systems, such transfers take place only after the object has reached a specific locat ion (e.g., an object storage and/or retrieval location) along the conveying path. The capacity of a material handling system is determined, among other things, by the rate at which each object is transferred to and/or from the applicable location.

In some material handling systems, a conveyor may form part of a movable vehicle used to transport objects to, or retrieve the objects from, the location where a transfer operation is performed. In material systems of this type, failure to rapidly and accurately determine that an object has been transferred from or to the conveyor may delay (or prevent) the vehicle from advancing to the next location.

CA1242986 relates to a conveyor system for use in sorting packages; US6264042 relates to a system for sorting objects having a sorting conveyor belt; AU2014216046 relates to sorting items; and WO01/10574 relates to a feeding and sorting system.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a front view, in elevation, depicting an object sensing arrangement;
FIG. 2A depicts a linear array of photodetector elements and collimated source of optical energy mounted on a common support structure and forming part of an object sensing arrangement such as the object sensing arrangement of Figure 1;
FIG. 2B depicts a reflecting mirror forming alignable with the common support structure of Figure 3A;
FIG. 3A is a front view of an object sensing arrangement detecting an optically opaque object when the object traverses a detection plane defined by propagation of collimated optical energy in a direction transverse to an object conveying path;
FIG. 3B is a front view of an object sensing arrangement detecting an object having at least one light refracting or reflecting portion while such object traverses a detection plane defined by propagation of collimated optical energy in a direction transverse to an object conveying path;
FIG. 4 is a perspective view of a vehicle of a material handling system;
FIG. 5 is an electrical schematic depicting a circuit comprising phototransistors and state sensing logic and operative to signal a change in sensing state when an object traverses the detection plane of one of the object sensing arrangements of FIGS. 1-4;
FIG. 6 is a perspective view depicting, in elevation, an exemplary material handling system which utilizes a plurality of object-sensing, conveyor-equipped vehicles, such as the conveyor-equipped vehicle depicted in FIG. 4, to deliver objects of various shapes, sizes, and opacities to an array of destinations;
FIG. 7 is a plan view depicting the exemplary material handling system of FIG. 6;
Figure 8 is an elevation view depicting the placement of conveyor equipped vehicles, within the material handling system of Figures 6 and 7, during a power-recharge cycle in accordance with one or more embodiments;
FIGS. 9 and 10 depict physical and virtual bins that contain various items;
FIG. 11 shows a narrow beam object sensing arrangement with the beam in alignment with the sensor;
FIG. 12 shows a narrow beam object sensing arrangement with the beam out of alignment with the sensor; and
FIG. 13 shows a wide beam object sensing arrangement with the beam in alignment with the sensor.

### DETAILED DESCRIPTION

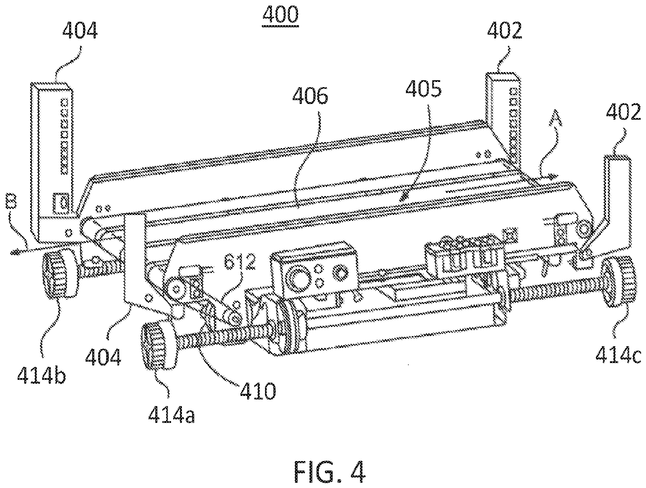

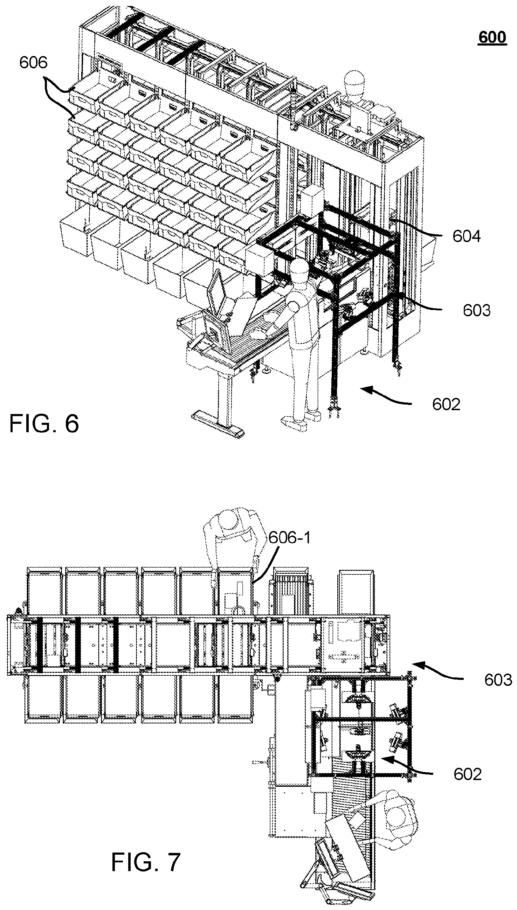

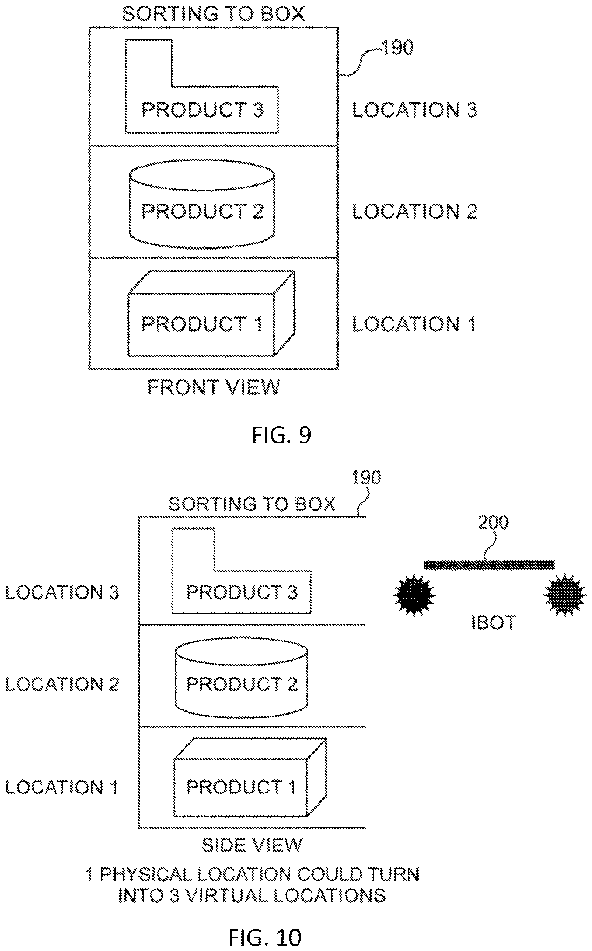

An apparatus for sorting items and components thereof are shown throughout the figures. FIGS. 6-8 depict a plurality of delivery vehicles 604 that travel along a track system 600 to deliver items to a plurality of destinations or sort locations, such as output bins 606. Fig. 4 (discussed below) shows an example embodiment of a bin 400 that can be used to implement bins 604, and Figs. 9 and 10 show exemplary embodiments of bins 190 that can be used to implement bins 606. Items are loaded onto the vehicles at a loading station so that each vehicle receives an item to be delivered to a sort location. An induction station serially feeds items to the loading station. One or more characteristic of each item can be used to control the processing of the items as the vehicles move along the track to the output bins. The characteristic(s) of each item may be known from each item or the characteristic(s) may be acquired by the system as the system processes the item. For instance, the induction station may include one or more scanning elements for detecting one or more characteristic of the item.

From the loading station, the vehicles travel along a track to the destinations. The track may include a horizontal upper rail and a horizontal lower rail, which operates as a return leg. A number of parallel vertical track legs may extend between the upper rail and the lower return leg. The bins 606 may be arranged in columns between the vertical track legs.

The vehicles 604 are semi-autonomous vehicles that may have an onboard power source and an onboard motor to drive the vehicles along the track. The vehicles may include a loading/unloading mechanism, such as a conveyor, for loading pieces onto the vehicles and discharging the pieces from the vehicles.

Since the system includes a number of vehicles 604, the positioning of the vehicles is controlled to ensure that the different vehicles do not crash into each other. In one embodiment, the system uses a central controller that tracks the position of each vehicle 604 and provides control signals to each vehicle to control the progress of the vehicles along the track. The central controller may also control operation of the various elements along the track, such as the gates.

With continued reference to Figures 6 to 8, an exemplary material handling system 600 utilizing object sensing, conveyor-equipped vehicles consistent with the present disclosure, will now be described. Figure 6 is a perspective view depicting, in elevation, an exemplary material handling system 600 which utilizes object sensing, conveyor-equipped vehicles to deliver objects of various shapes, sizes, and opacities to an array of destinations. In an embodiment, an induction station 602 scans objects and conveys them to a loading station 603. Figure 7 is a plan view of the material handling system 600. At the loading station 603, each vehicle 604 receives an object from the induction station 602 and delivers it to one of a plurality of destinations. In an embodiment, the destinations are object receiving compartments or bins 606, and each bin 606 is dimensioned and arranged to receive a grouping of one or more objects that is associated with a single customer order.

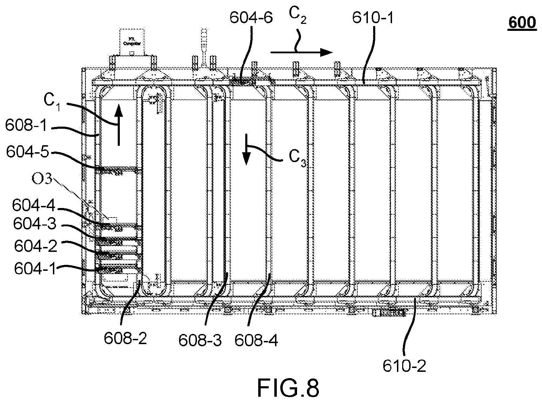

Turning briefly to Figure 8, which is an elevation view depicting the placement of conveyor equipped vehicles within the material handling system of Figure 6, it can be seen that vehicle 604-4 receives an object 03 from the loading station 603 and, thereafter, travels in the direction C1 along parallel pairs of vertical rails indicated generally at 608 (with only one vertical rail from each pair, 608-1 and 608-2, being shown). Vehicle 604-5 is also shown traveling in the direction C1 between the same pair of vertical rails 608, while vehicles 604-1 to 604-3 are shown at a power recharge station along the same pair of rails as they await assignment to an object transfer operation.

Each vehicle 604-1 to 604-6 may be semi-autonomous and have an onboard power source and an onboard motor to drive the vehicle along the track system, and each includes a loading/unloading mechanism. In some embodiments, the loading/unloading mechanism comprises a belt conveyor which defines a substantially planar, object supporting surface that is driven by the same or a different onboard motor to convey the object in a first object transfer direction or in a second object transfer direction opposite to the first object transfer direction. In other embodiments, the loading/unloading mechanism includes a stationary object supporting surface and a pusher arrangement adapted to push the object across the object supporting surface and into one of the bins 606.

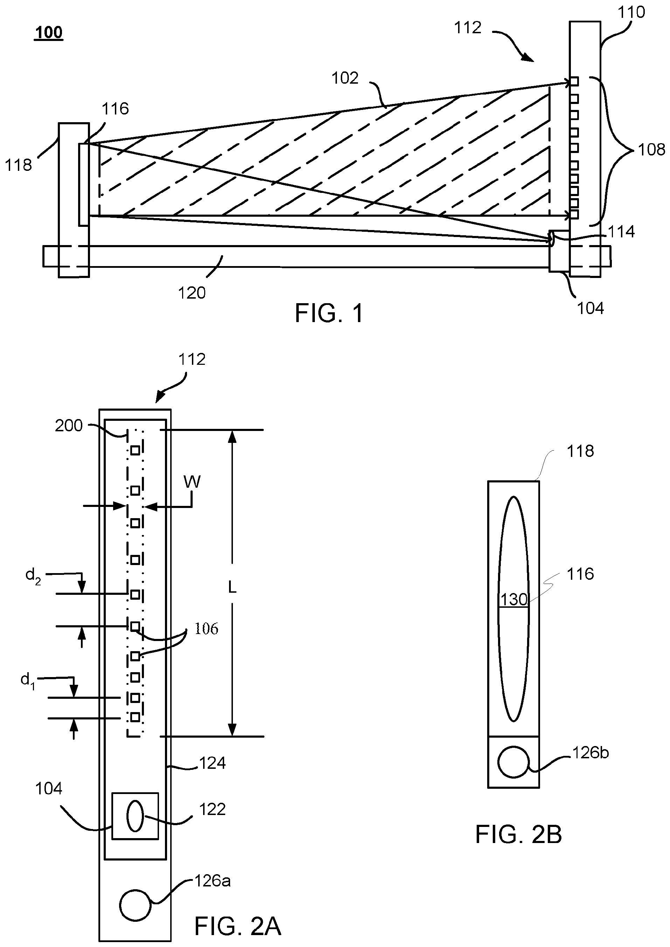

In embodiments consistent with the present disclosure, an object transfer cycle is initiated when the leading edge of an object enters a detection plane formed by a sensing arrangement such as sensing arrangement 100 of Figures 1-3, and an object transfer cycle is concluded when the trailing edge of the object exits the detection plane/light curtain. Completion of each cycle constitutes confirmation than the object has been transferred from the object supporting surface of vehicle 604 and into one of bins 606. The ability to accurately detect completion of each cycle for objects of varying shapes, sizes, and optical properties allows each vehicle to return to the charging and/or object transfer station 603 without the delays which might otherwise be experienced due to a detection failure. As well, the risk of a vehicle leaving a destination proximate one of bins 606 and/or leaving the loading station 603 before a transfer has been fully completed is also substantially reduced without regard to the shape and opacity of the objects involved.

With continued reference to Figure 8, the track network formed by vertical rails 608 also includes upper and lower pairs of horizontal rails, of which only a single upper horizontal rail 610-1 and a single lower horizontal rail 610-2 are shown. With continued reference to Figure 8, it can be seen that in order to reach one of bins 606, each vehicle as vehicle 604-6, must move traverse at least a portion of the upper rail pair that includes upper rail 610-1. At the location shown, vehicle 604-6 may transition from movement in the direction C2 to movement in the direction C3 by switching to the parallel pair of vertical rails which includes vertical rails 608-3 and 608-4.

As seen in Figure 7, the bins 606 may be located on both sides of the network of rails used by vehicles 604. When all the objects associated with an order fulfillment shipment have been aggregated in a bin, such as bin 606-1, an operator may remove the bin 606-1 and replace it with an empty one, or the objects within bin 606-1 may be transferred directly into a package for shipment. Alternatively, the bins 606 themselves may comprise shipping containers of various sizes and shapes, the locations of each size carton being tracked by software so that objects collectively occupying a particular volume are matched to a shipping carton capable of accommodating them.

The following description provides details of the various elements of the system, including a sensing arrangement that works in conjunction with the vehicles 400. The manner in which the system operates will then be described. In particular, the manner in which the items are delivered to bins 190 may be controlled based on the characteristics of the items.

The inventors have found that it is desirable to detect the leading and trailing edges of an item when the item is loaded onto a vehicle or discharged from the vehicle. Accordingly, each vehicle may include one or more sensors to detect items on the vehicle.

Each vehicle may include a plurality of detectors that detect items on the top of the vehicle (i.e. on the surface of the belt 406). One of the sensors may be positioned near the front edge to detect the items as the items are loaded onto or discharged from the front edge. Similarly, one of the sensors may be positioned adjacent the rear edge to detect items as the items are loaded onto or discharged from the rear edge. For instance, the leading sensor may be a beam break sensor so that when an item passes in front of the beam the beam is interrupted. When an item is loaded onto the vehicle 400, the leading edge of the item will interrupt the beam, thereby indicating that the leading edge of the item is on the vehicle. The item may continue to block the lead sensor until the trailing edge of the item passes the lead sensor. After the trailing edge of the item passes the lead sensor, the lead sensor will no longer detect the item, thereby indicating that the item is loaded onto the vehicle. After the trailing edge passes the lead sensor, the conveyor 406 may continue to drive the item toward the rear edge to ensure that the item is centered along the width of the vehicle. Similarly, the lead sensor may detect the leading and trailing edges of the item as the item is discharged from the front of the vehicle. Detection of the trailing edge passing the front sensor can be used to signal that the item has been discharged from the vehicle. The vehicle is then prompted to advance away from the discharge location. The description above of the use of the lead sensor to detect the leading and trailing edges of items being loaded onto or discharged from the front edge is similar to the use of the rear sensor in detecting the leading and trailing edges of an item as the item is loaded onto or discharged from the rear edge of the vehicle.

In the foregoing description, the sensors detect items being loaded onto and being discharged from the front edge or rear edge of the vehicle. In certain applications it may be desirable to incorporate a sensing assembly that provides for detection for a greater variety of items. For instance, when using a beam break sensor it may be difficult to detect the leading or trailing edge of the item if the item is very thin or if the item is transparent or translucent. Accordingly, the system may incorporate an alternate sensing arrangement described below. Although the sensing arrangement is described in connection with a vehicle of the material handling system, it should be understood that the sensing arrangement may incorporated into other aspects of the system, such as detecting an item as it passes along through the induction station. Further still, the sensing arrangement 500 described below may find further application in fields of endeavor outside the material handling field.

Embodiments of the edge sensing assembly include a system and method for aiding in the reliable and accurate detection of an event such as the traversal of a detection plane by the leading and/or trailing edge surface(s) of an object supported by an underlying conveyor surface. According to one or more embodiments, the detection plane is defined by optical energy, emitted by a laser and collimated by a lens system to form a diverging, constant width beam propagating within the detection plane. A linear array of photodetectors is maintained in alignment with the lens system such that the collimated optical energy will strike, at a non-normal angle of incidence, any object which crosses the detection plane.

Conventional "cross-beam" sensors may have a difficult time detecting clear objects, thin objects and/or irregular shaped objects. For example, a bowl of a soup ladle will trigger a cross-beam sensor, but depending on the relative height of the cross-beam, once the bowl has passed, and only the handle is proximate the cross-beam sensor, the cross-beam sensor may not be able to detect the presence of the ladle. In accordance with one more embodiments consistent with the present disclosure, irregularly shaped objects, such as soup ladles are readily sensed by a change in the intensity of the optical energy detected by one or more of the photodetectors in the array. In another example, if an optically opaque object is present, optical energy will be absorbed such that at least one of the photodetectors senses a drop in optical intensity. Alternatively, for an object that includes portions and/or packaging which is optically transparent, some light may pass and some may be reflected or refracted such that at least one of the photosensors senses a less pronounced, but nonetheless detectable, drop in optical intensity. Even relatively thin (on the order of 0.05 mm) objects may be reliably detected with an appropriate arrangement of the lens system and photodetectors.

Various embodiments of systems and methods for detecting traversal of a detection plane by the leading and/or trailing edge surface(s) of an object supported by an underlying conveyor surface are described. In the following detailed description, numerous specific details are set forth to provide a thorough understanding of the claimed subject matter. However, it will be understood by those skilled in the art that claimed subject matter may be practiced without these specific details. In other instances, methods, apparatuses or systems that would be known by one of ordinary skill have not been described in detail so as not to obscure claimed subject matter.

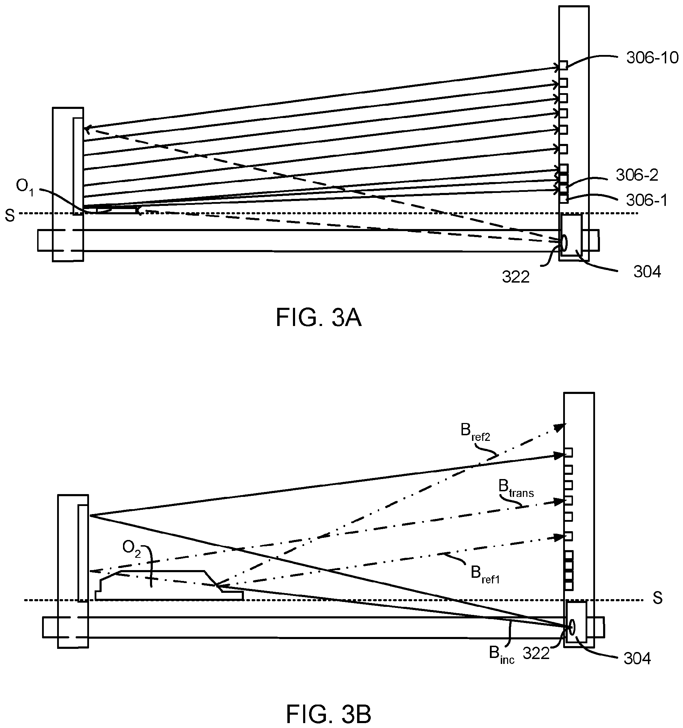

Referring to Figs. 1-2B, the edge detecting assembly 100 includes one or more emitters 104 for emitting a source of light and one or more detectors 106 for detecting the emitted light. At least one emitter 104 is positioned below the surface S on which the item is supported. For example, in the embodiment illustrated in Fig. 3A, the emitter 304 is vertically spaced from the plane of surface S so that the emitter is below the plane of surface S. In this example, the plane of surface S is a horizontal plane and the emitter is under the surface. In this way, light emitted from emitter 304 projects upwardly at an angle relative to the plane of surface S. By projecting the emitted light at an angle relative to surface S, the object may have a larger surface to impinge the emitted light than if the light is emitted parallel to the surface S. For instance, in the example of a piece of paper laying on surface S, if the light from the emitter is projected parallel to surface S, then only the side edge of the paper will reflect or block emitted from the emitter. Since the side edge of the paper is so thin (such as 0.05 mm) it would be difficult or impossible to detect using an emitter that projects light parallel to surface S. However, by lowering the emitter to a position below S and projecting the light at an angle relative to surface S, then the entire width of the paper may reflect light from the emitter.

Turning now to Figure 1, the object sensing assembly 100 is adapted to sense when a boundary surface of an object (e.g., the leading edge or trailing edge of object disposed on an underlying object support surface) has crossed into a detection plane or "curtain" 102 of light emitted by an emitter 104, also referred to as an emitter. A linear array of photodetector elements 106, indicated generally at 108, is aligned with the emitter 104 so that the emitted light strikes each of the photodetectors with undiminished intensity unless an object is interposed into the detection plane 102.

In some embodiments, the emitter 104 is a solid state laser that emits a beam of coherent light within the range of wavelengths visible to the human eye. For efficient and reliable detection of its output, the emitter 104 may be a laser which emits light at or near the peak sensitivity of the photodetectors 106. According to one embodiment, the photodetectors are phototransistors which, by way of example, may have a spectral range of sensitivity within a range of frequencies between 350 to 950 nm and a sensitivity peak of 560 nm. One such phototransistor is the SFH3710 manufactured by Osram Opto Semiconductors GmbH of Regensburg, Germany. It should be noted, however, that other photodetectors such, for example, as photodiodes, may be employed in place of phototransistors. The effects of ambient light on photodetector sensitivity may be addressed, if appropriate, by placing a bandpass filter over the array 108 to prevent light outside a narrow range centered around the sensitivity peak from reaching the photodetectors.

The emitter 104 may comprise a single laser having an integral lens system including one or more collimating lenses as lens 122. The lens 122 is dimensioned and arranged to receive optical energy emitted by the laser source and to collimate the received optical energy such that the light beam diverges within the curtain 102 along a major axis but does not diverge along a minor axis. As seen in Figure 1 and 2A taken together, the collimated output of the emitter 104 propagates within curtain 102 and forms a line or area 200 spanning each photodetector 106 of the linear array 108. Even thin and optically transmissive (e.g. translucent) or highly reflective objects can be detected if the collimated output of the optical source 104 strikes the object at an oblique angle and the photodetectors are spaced from one another and located at an elevation relative to where light enters and/or is reflected by the object.

For example, from the perspective of Fig. 1, using a light curtain 102 having a width of approximately 25-35 cm wide and a height of approximately 10 to 20 cm, the assembly can detect an object having a thickness of between 0.05 mm (i.e. the thickness of a single sheet of paper) to about 10 cm and a width on the order of about 7.5 cm to about 30.5 cm. Such detection can be achieved with a 1 mW laser having integrated collimating optics. With a fan angle of 20 degrees and a beam divergence of less than 2 milliradians (imRads), such a laser can project a 5 cm line having a width of 1 -2 mm. When placed adjacent to, but slightly below, a discharge end of an object support surface, the optical source 104 and array 108 form a detection plane which is transverse and orthogonal to the plane defined by the object support surface. In some embodiments, the object support surface may be the moving surface of a conveyor belt. In other embodiments, the object support surface may be a stationary or tilting table surface.

Depending on the components forming the collimating lens system, the intensity of light within line 200 in Fig. 2A may be uniform across all photodetectors 106 when no object is present to interfere with the integrity of the light curtain 102.

Alternatively, the intensity across light curtain 102 may vary according to a Gaussian or other predictable distribution function. In either case, embodiments consistent with the present disclosure are configured to detect a change in optical intensity received at any of photodetectors 106 when an object crosses (or leaves) the light curtain 102. That is, when an amount of optical energy above a sensitivity threshold is absorbed, reflected or refracted by an object on surface S, the output of at least one of the photodetectors 106 of array 108 will signal a change in state.

In an illustrative example where the sensing arrangement 100 forms part of a material handling system, a detected change of photodetector state may be used to confirm the successful transfer of an object into a storage or packing location, successful retrieval of an object from a storage location or picking location. Conversely, the failure to detect a signal indicative of a change in state may also be used to control an operation in a material handling or other system. For example, after a predetermined "timeout" interval, failure to register a change of state may be used as part of an alert sequence (e.g., to trigger an audible or visual alert to a human operator).

One possibility for increasing the coverage of the light detected by the detectors 106 would be to use a complementary pair of photodetector arrays and optical sources so as to increase the coverage of the light curtain. In the arrangement of Figure 1, however, it will be seen that a reflecting mirror 116 may be used to fold the optical path and thereby obtain comparable results. In such arrangements, the photodetector elements 106 of array 108, together with the emitter 104, may be optionally mounted to a first rigid support 110 to form an integrated emitter/detector assembly 112. A reflecting mirror 116 may be mounted to a second rigid support 118. The first and second supports 110, 118 may be rigidly connected, such as by a support shaft 120 extending between the two supports. The shaft 120 may be resiliently biased to maintain the orientation of the light curtain 102 relative to the surface S, while also permitting transient angular reorientation of the light curtain in response to translation of surface S.

In some embodiments, the photodetector elements 106 and optical source 104 may be mounted on a common substrate 124 such, for example, as a printed circuit board. The collimated, diverging beam emitted by lens 122 of emitter 104 is reflected by the surface 130 (Figure 2B) of mirror 116 and forms a projected line or area 200 over the array 108 of photodetectors 106. In an exemplary application, where objects to be processed are expected to have heights which may vary from less than one mm up to 20 cm or more, line 200 may have a width W, for example, on the order of from about one to about five mm wide and a length L, for example, on the order of 10 to 20 cm long. In an exemplary embodiment, the array 108 is arranged to provide coverage over the entire length of the line L.

To accommodate the detection of very thin objects, those photodetectors 106 of the array closer to the object support surface S may be more closely spaced than those further away from the object support surface. In the exemplary embodiment of Figure 2A, the spacing di among the lowest four photodetectors may be on the order of 1-5 mm while the spacing d2 among the remaining photodetectors is on the order of 10-15 mm. Of course, such an arrangement is described herein by way of illustrative example only. Also contemplated herein are arrangements such as those in which the inter-photodetector spacing among at least a subset of the photodetectors increases monotonically with distance from the object supporting surface, and/or arrangements in which a uniform inter-photodetector spacing is used. It suffices to say that the number and spacing of the photodetectors may be varied without departing from the spirit and scope of the present disclosure.

Figure 2B depicts a reflecting mirror 116 mounted on an arm 118 and alignable with the support 110 of Figure 2A to form an object sensing arrangement 112 such as the one depicted in Figure 1. As seen in Figure 2B, the mirror 116 defines a substantially planar reflecting surface 130 and is affixed to second rigid member 118. Additionally, as shown in Figures 1, 2A and 2B, the height of the curtain of light impinging mirror 116 is substantially less than the height (L) of the array 108. Accordingly, the height of the mirror 116 may be substantially less than the height (L) of the array 108.

A transverse bore 126a and 126b may be defined in each of first rigid member 110 and second rigid member 118 to accommodate insertion of an optional mounting shaft such as mounting shaft 120 (Figure 1). In operating environments in which the sensing arrangement is secured to a stationary structure such, for example as the frame of a conventional belt or roller conveyor, the mounting shaft and corresponding transverse bores 126a and 126b may be omitted. Alternatively, or in addition, some other structure for aligning the optical source, photodetectors and reflecting mirror (if applicable) relative to one another and to an object support surface may be employed.

Figure 3A depicts use of a sensing arrangement such as the one depicted in Figure 1 to detect an optically opaque object Oi as the object moves along an object conveying path (e.g., upon an underlying support surface S) and traverses a light curtain (or "detection plane") that is defined by propagation of collimated optical energy in a direction transverse to the object conveying path. As seen in Figure 3A, light emitted by optical energy source 304 is collimated by a lens structure which includes lens 322. In this example, the height and width of object O1 are such that light from emitter 304 is reflected from mirror 116 and detected by detectors 306-2 through 306-10. However, object O1 absorbs most or all of the optical energy that would have reached photodetector 306-1, so that detector 306-1 does not detect light or the light detected by detector 306-1 is below a threshold.

As explained in greater detail below, the reduction in intensity at the photodetector 306-1 can be processed by appropriate sensing logic as a change in state (e.g., a logical "1 ") indicative of an object traversing the detection plane defined by a surface of a generated light curtain 102. Likewise, when no part of the object Oi remains within the light curtain, a second state transition occurs when the intensity of the optical energy received at photodetector 306-1 returns to the earlier state (e.g., a logical "0").

Figure 3B depicts the detection of an object 02 that includes at least one light refracting or reflecting portion when object 02 moves along a conveying path that is traverse a detection plane defined by propagation of collimated optical energy. For example, object 02 may be an item such as block contained in a transparent or translucent packaging that extends beyond the volume of the block. Such an object may have portions that are opaque (e.g. the block) and portions that are transparent or reflective (e.g., the packaging that encapsulates the block).

Some of the light emitted by the emitter 304 will pass through clear portions of object 02, and in configurations in which the emitter is parallel to the surface S, the light may pass through the clear or translucent portion so that the system does not detect the object. In the present instance, since the light emitted by emitter 304 is transverse the support surface S on which object 02 is supported, the light passing through transparent or translucent portions of object 02 may be refracted such that the light does not impinge the detector array. For example, referring to Fig. 3B, emitted light such as that propagating along the ray Binc will strike surfaces of 02 at an oblique (non-normal) angle. Some of the incident light Binc may be reflected and/or refracted after striking the object 02. Depending upon the surface characteristics of object 02, some or all of the reflected incident light may be directed away from the photodetectors, as ray Bref2, and other portions (e.g. ray Brefi) may be reflected into a different photodetector than it would have if all of the light had been transmitted through the object 02 (e.g., along ray Btrans) or if the object not been there at all. In this way, the array will detect a change in light from the emitter when the translucent or transparent portions of the object refract light away from the array so that the system will detect the object.

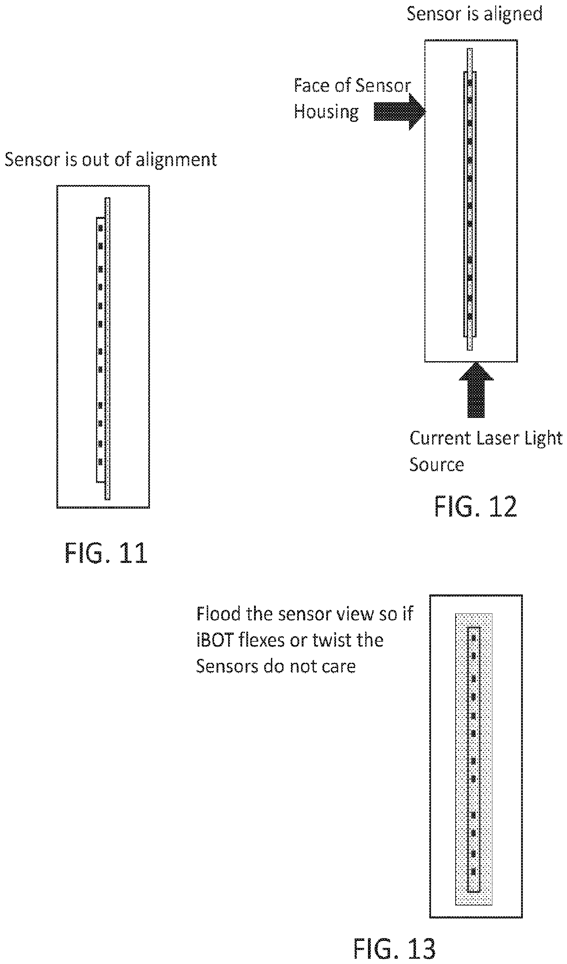

In relation to FIGS. 11-13, the inventors found that relatively small variations in the mirror position relative to the light source can occur due to, for example, flexing or twisting of the vehicle 400. These small variations can cause the laser light source to be out of alignment with the array of photodetectors as shown in Fig. 11. As a result of these variations, the sensing mechanism could erroneously detect that an object is present, when in fact no object is present. To prevent such erroneous detections, the inventors have found that flooding the detectors with a relatively large light beam provides an advantage in terms of maintaining alignment between the light beam and the detectors. Specifically, the inventors have found that the width of the light beam can be increased so as to increase the error tolerance of the sensing mechanism. Increasing the width of the light beam may permit the detectors to detect the light beam even when the light beam is not in perfect alignment with the detectors. In one embodiment of the invention, the emitter 104 may be programmed to provide light having a width that is greater than the width W of the photodetectors in the array of photodetectors, as shown in Fig. 13.

As noted previously, the edge detection assembly 100 may be incorporated into a vehicle used in the material handling system described above. For instance, turning to Figure 4, an exemplary vehicle 400 is illustrated. The vehicle 400 includes one or more edge detection assemblies 402, 404 similar to the edge detection assembly 100 described above.

Each vehicle 400 may include a single object sensing arrangement for sensing object movement in a single direction along a conveying path. Alternatively, and as shown, each vehicle 400 may include a pair of object sensing arrangements in the form of detection assemblies 402 and 404. Each vehicle may also include one or more conveyors for conveying objects while the objects are on the vehicle. The belt forms a generally flat or planar surface for supporting objects on the vehicle 400. For instance, the conveyor 406 may be a conveyor belt. The first detection assembly 402 may be positioned adjacent a rear edge of the vehicle 402 so that the emitter is positioned below the top surface of the conveyor belt 406. The detectors of the detection assembly 402 may be positioned above the surface of the conveyor belt. Additionally, the detection assembly may be positioned adjacent the rear edge of the conveyor belt so that the surface of the conveyor belt does not extend between the emitter and detector of the detection assembly. In this way, as an object passes onto the rear edge of the vehicle the object will first pass between the emitter and detector array of the detection assembly 402. Similarly, when an object is being discharged from the rear edge of the vehicle, the leading edge of the item will pass between the emitter and detector array of the detection assembly if the leading edge extends past the end of the conveyor. Similarly, the front detection assembly 404 is positioned adjacent the front edge of the vehicle so that front detection assembly 404 detects the leading edge of objects as the object is being loaded onto or discharged from the leading edge of the vehicle.

Detection assembly 402 may, for example, signal a first change in logic state when an object is moved by conveyor 406 in a first transfer direction "A" such that the leading edge of the object crosses a first light curtain detection plane of the edge sensing assembly, as previously described in connection with assembly 100. Such a signal would be indicative of the leading edge of the item being discharged from the rear edge of the vehicle. Likewise, detection assembly 402 may signal a subsequent (e.g., second) change in logic state if and when continued movement of the object by conveyor 406 in the direction A results in the trailing edge of the object exiting the first light curtain detection plane. Such a signal would be indicative of the trailing edge of the object being discharged from the rear edge of the vehicle, thereby indicating that the item has been discharged from the vehicle.

Similarly, detection assembly 404 may signal a first change in logic state when an object is moved by conveyor 406 in a second transfer direction "B" and its leading edge crosses a second light curtain detection plane of the edge sensing assembly 404. Likewise, detection assembly 404 may signal a subsequent (e.g., second) change in logic state if and when continued movement of the object by conveyor 406 in the direction B results in the trailing edge of the object exiting the second light curtain detection plane.

The vehicle 400 may include side walls dimensioned and arranged to prevent translation of an object on conveyor surface 405 as the vehicle moves along a travel path transverse to the conveyance path directions A and B. Movement of the conveyor 406 in either the A or B direction is, in some embodiments, performed by a reversible electric motor 410 which uses a belt 412 to transfer power to conveyor shaft. A separate motor drives the track engaging wheels (e.g., 414a, 414b, 414c) of vehicle 400.

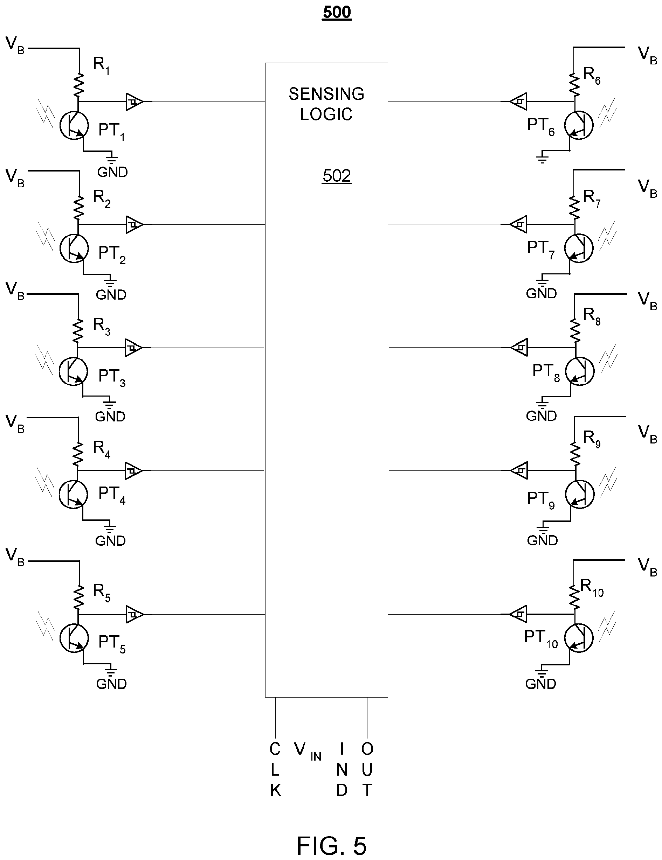

Figure 5 is an electrical schematic depicting a circuit 500 comprising photodetectors and state sensing logic and operative to signal a change in sensing state when an object traverses the detection plane or light curtain along which the phototransistors are arranged, in accordance with an exemplary embodiment of the present disclosure. In the exemplary embodiment of Figure 5, the photodetectors are implemented as NPN phototransistors PT1 to PT10 in respective common emitter amplifier circuits.

The output of each common-emitter amplifier circuit is created by connecting a corresponding resistor (R1 to R10) between a voltage supply VB and the collector pin of the associated phototransistor. The values of resistors R1 to R10 are chosen to set the detection threshold (e.g. to discriminate between anticipated levels of ambient light at a given installation). A low value (a few thousand ohms) for the threshold resistors sets a high threshold level for the incident light to exceed before switching takes place (i.e, low sensitivity) while a high value sets a low threshold level (i.e, high sensitivity). Using, for example, the SFH3710 phototransistor manufactured by Osram Opto Semiconductors GmbH of Regensburg with a voltage VB on the order of 3.0 to 3.5 volts, under conditions normally applicable to an indoor warehouse environment, a resistance value for R1 to R10 on the order of 300 ohms may yield a circuit which is not impaired by noise or interference from ambient light sources such as indoor lighting. In addition, or alternatively, a filter which limits the light reaching the phototransistors to a relatively narrow (e.g, +/- 2 nm) passband centered at a selected wavelength within the sensitivity envelope of the phototransistors (not shown) may also be used.

The sensing logic 502 may comprise any arrangement capable of quickly sensing the output of each photodetector and signal and/or process a state change indicative of a light curtain excursion. In one example consistent with the embodiment of Figure 5, the output of each phototransistor circuit may be combined using combinatorial logic so that when the output of any one of the phototransistors falls below the sensitivity threshold, a change in state from "0" to "1" is output by the sensing logic 502. When the output of all phototransistors returns to a "0", a subsequent change in state from "1" to "0" is output by sensing logic 502. In an embodiment, the sensing logic 502 may comprise a field programmable gate array.

In other embodiments, the sensing logic may be implemented by a microprocessor which senses or samples the output of each respective photodetector during a corresponding clock cycle and initiates action in response to any of the photodetectors going from a high to a low state or vice versa and, in a subsequent cycle, when all of the photodetectors are once again all outputting a high state. In some embodiments, a vehicle such as the vehicle 400 of Figure 4, may include a microprocessor which not only monitors the sensing arrangement(s), such as 402 and 404, but also controls the movements of the conveyor 406 and the vehicle itself.

Embodiments consistent with the present disclosure may employ sensing arrangements, such as the arrangement 100 of Figures 1-3, in conjunction with systems for conveying objects along a conveying path. Such systems define one or more object support surfaces and may further include one or more object transfer mechanisms respectively operative to move the object(s) supported by the object support surface in at least one object transfer direction. In some embodiments, the support surface(s) may be defined by surfaces of one or more belt conveyor(s), one or more roller conveyor(s), one or more tilting table(s), or one or more stationary tables. Where tilting or stationary tables are used, they may have perforations in fluid communication with a source of pressurized air to reduce friction during an object transfer operation.

Transfer of an object onto or from the object support surface(s) of a system constructed in accordance with embodiments of the present disclosure may be performed in a number of ways. By way of illustrative example, a pusher bar or other structure may apply positive forces moving the object onto, across, and/or from the object support surface. Alternatively, or in addition, an object supporting surface may itself be reoriented (e.g., tilted) by an object transfer mechanism such that an object moves, by gravity, onto another object support surface or into a bin or carton at a destination. By way of still further example, an object transfer mechanism may include a conveyor having, for example, a belt that defines the object support surface. In such embodiments, the belt may be driven in a first direction to transfer the object toward a first discharge end of the object transfer mechanism so that it may fall into, for example, a first waiting container. Similarly, the same belt may be driven in a second direction to transfer the object toward a second discharge end of the object transfer mechanism so that it may fall into, for example, a second waiting container.

In some embodiments, one or more object support surfaces of a material handling system and, optionally, one or more object transfer mechanisms, may be moved by a vehicle to an object transfer destination. In one embodiment, a conveyor equipped vehicle such as vehicle 400 of Figure 4 may be used as part of a material handling system such as an apparatus for sorting objects into groupings of "n" items, for example. In one embodiment, "n" is equal to or greater than one and each grouping comprises the object(s) to be placed in a single shipping carton for shipment to a single customer as part of an order fulfillment process.

In some embodiments an object transfer cycle is initiated when the leading edge of an object enters a detection plane formed by a sensing arrangement such as sensing arrangement 100 of Figures 1-3, and an object transfer cycle is concluded when the trailing edge of the object exits the detection plane/light curtain. Completion of each cycle constitutes confirmation than the object has been transferred from the object supporting surface of vehicle 400 and into one of bins 190. The ability to accurately detect completion of each cycle for objects of varying shapes, sizes, and optical properties allows each vehicle to return to the charging and/or object transfer station without the delays which might otherwise be experienced due to a detection failure. As well, the risk of a vehicle leaving a destination proximate one of bins 190 and/or leaving the loading station before a transfer has been fully completed is also substantially reduced without regard to the shape and opacity of the objects involved.

The system operates as follows. An item is processed at the induction station to identify a characteristic of the item that is indicative of where the piece should be sorted. As described previously, the item may also be processed to determine whether the item is qualified to be transported by one of the vehicles based on physical characteristics of the item. The central controller maintains data that correlates various data to identify the destination bin or location for the items being processed.

The induction station may process the items automatically or manually. In a manual mode, the operator manually enters information regarding a piece and then drops the piece on a conveyor. The system electronically tags the piece with the sort information and the conveyor conveys the piece toward the loading station. Alternatively, if the input system is an automated system, the piece is automatically scanned to identify the relevant sort characteristic. For instance, the input station may use a scanner, such as a bar code scanner to read the bar code on a piece, or the input station may include an imaging device, such as a high speed line scan camera in combination with an OCR engine to read information on the piece.

To prepare to receive an item, a vehicle 400 moves along the track toward the loading station in the loading column. When the vehicle 400 moves into position at the loading station the home sensor detects the presence of the vehicle and sends a signal to the central processor indicating that the vehicle is positioned at the loading station.

Once the vehicle is positioned at the loading station, the input station conveys an item onto the vehicle. As the item is being conveyed onto the vehicle 400, the loading mechanism on the vehicle loads the item onto the vehicle. Specifically, the input station conveys the item into contact with the conveyor belts 406 on the vehicle. The conveyor belts 406 rotate toward the rearward side of the vehicle, thereby driving the item rearwardly on the vehicle.

The operation of the conveyor belts is controlled by the loading sensors. The forward loading sensor detects the leading edge of the item as the item is loaded onto the vehicle. Once the forward loading sensor detects the trailing edge of the item, a controller onboard the vehicle determines that the item is loaded on the vehicle and stops the conveyor motor. Additionally, the onboard controller may control the operation of the conveyor in response to signals received from the rearward sensor. Specifically, if the rearward sensor detects the leading edge of the item, then the leading edge of the item is adjacent the rearward edge of the vehicle. To ensure that the item does not overhang from the rearward edge of the vehicle, the controller may stop the conveyor once the rearward sensor detects the leading edge of the item. However, if the rearward sensor detects the leading edge of the item before the forward sensor detects the trailing edge of the item, the controller may determine that there is a problem with the item (i.e. it is too long or two overlapping items were fed onto the vehicle. In such an instance, the system may tag the piece as a reject and discharge the item to the reject bin positioned behind the loading station. In this way, if there is an error loading an item onto a vehicle, the item can simply be ejected into the reject bin, and a subsequent item can be loaded onto the vehicle.

After an item is loaded onto the vehicle, the vehicle moves away from the loading station. Specifically, once the onboard controller detects that an item is properly loaded onto the vehicle, the onboard controller sends a signal to start the drive motor. The drive motor rotates the axles, which in turn rotates the gears on the wheels. The gears mesh with the drive surface of the vertical rails in the loading column to drive the vehicle upwardly. Specifically, the gears and the drive surfaces mesh and operate as a rack and pinion mechanism, translating the rotational motion of the wheels into linear motion along the track.

Since the vehicles move up the loading column from the loading station, the destination for the vehicle does not need to be determined until after the vehicle reaches the first gate along the upper rail. For instance, if an automated system is used at the induction station to scan and determine the characteristic used to sort the items, it may take some processing time to determine the relevant characteristic and/or communicate that information with a central controller to receive destination information. The time that it takes to convey the item onto the vehicle and then convey the vehicle up the loading column will typically be sufficient time to determine the relevant characteristic for the item. However, if the characteristic is not determined by the time the vehicle reaches the upper rail, the system may declare that the item is not qualified for sorting and the vehicle may be directed to the re-induction station to discharge the item onto the discharge assembly. From the re-induction station, the vehicle travels down the second column to the lower rail, and then back to the loading column.

Once the item is qualified for sorting, the central controller determines the appropriate bin 190 for the item. Based on the location of the bin for the item, the route for the vehicle is determined. Specifically, the central controller determines the route for the vehicle and communicates information to the vehicle regarding the bin into which the item is to be delivered. The central controller then controls the gates along the track to direct the vehicle to the appropriate column. Once the vehicle reaches the appropriate column the vehicle moves down the column to the appropriate bin. The vehicle stops at the appropriate bin 190 and the onboard controller sends an appropriate signal to the conveyor motor to drive the conveyor belts 406, which drives the item forwardly to discharge the item into the bin. Specifically, the top of the vehicle aligns with the gap between the appropriate bin 190 and the bottom edge of the bin that is immediately above the appropriate bin.

In the present instance, the orientation of the vehicles does not substantially change as the vehicles move from travelling horizontally (along the upper or lower rails) to vertically (down one of the columns). Specifically, when a vehicle is travelling horizontally, the two front geared wheels cooperate with the upper or lower horizontal rail or of the front track, and the two rear geared wheels cooperate with the corresponding upper or lower rail of the rear track. As the vehicle passes through a gate and then into a column, the two front geared wheels engage a pair of vertical legs in the front track, and the two rear geared wheels engage the corresponding vertical legs in the rear track.

As the vehicle travels from the horizontal rails to the vertical columns or from vertical to horizontal, the tracks allow all four geared wheels to be positioned at the same height. In this way, as the vehicle travels along the track it does not skew or tilt as it changes between moving horizontally and vertically.

Since the system includes a number of vehicles 400, the system controls the operation of the different vehicles to ensure the vehicles do not collide into one another. In the following discussion, this is referred to as traffic control. Exemplary methodologies for controlling the flow of traffic are described in U.S. Pat. No. 7,861,844, filed January 14, 2008 which is hereby incorporated by reference as if set forth in its entirety herein.

In the present instance, some of the columns may have two vertical rails that are independent from the adjacent columns. For instance, the loading column has two independent rails that are not shared with the adjacent column. Therefore, vehicles can travel up the loading column without regard to the position of vehicles in the column next to the loading column. Furthermore, it may be desirable to configure the column next to the loading column so that it also has two independent vertical rails. In this way, vehicles can more freely travel up the loading column and down the adjacent column.

In the foregoing discussion, the sorting of items was described in relation to an array of bins disposed on the front of the sorting station. However, the number of bins in the system can be doubled by attaching a rear array of bins on the back side of the sorting station. In this way, the vehicles can deliver items to bins on the front side of the sorting station by traveling to the bin and then rotating the conveyor on the vehicle forwardly to eject the piece into the front bin. Alternatively, the vehicles can deliver items to bins on the rear side of the sorting station by traveling to the bin and then rotating the conveyor on the vehicle rearwardly to eject the piece into the rear bin. Additionally, the sorting station 100 is modular and can be readily expanded as necessary simply by attaching an additional section to the left end of the sorting station.

One or more characteristics of an item being transported by a vehicle may be detected or determined for the item during processing. This detected information can be used to control the further processing of the item. In particular, the control of the vehicle between the loading station and the destination bin 190 may be varied in response to the detected information. More specifically, the movement of the vehicle along the track may be varied in response to the detected characteristic(s).

A variety of movement variables for the vehicle may be varied based on the detected information. The list of movement variables includes, but is not limited to: acceleration profile (i.e. how rapidly the vehicle accelerates), braking profile (i.e. how rapidly the vehicle brakes) and cornering speed (i.e. how fast the vehicle goes around corners). Another manner in which the vehicle may be controlled in response to the detected information is the manner in which items are ejected from the vehicle. In particular, the belt speed of the vehicle may be increased or decreased to vary the speed with which an item is ejected.

By way of example, the system may have a default control profile that is used to control the movement of the vehicles along the track. Under the default profile, the vehicle moves along the track at first peak velocity, accelerating at a first rate and braking at a first rate. Additionally, under the default movement profile, the vehicle has a first peak speed as the vehicle travels around a curve from horizontal to vertical or from vertical to horizontal. The default profile may apply to a variety of items having a series of characteristics that fit within a default characteristic profile, such as flat items having a reasonable weight (.e.g. a book, a box weighing a few ounces or more, etc.). However, if the system detects a characteristic that varies from the default characteristic profile, the system may vary the control of the vehicle movement. In particular, the system may control the movement according to a second movement profile. For example, if the system detects that an element is cylindrical the system may control the vehicle according to a movement profile that is different than the default profile. The vehicle may accelerate more slowly than the default profile to reduce the likelihood of the item rolling on the vehicle. Similarly, the vehicle may brake more slowly and may travel around corners at a slower rate to reduce the likelihood of the item rolling on the vehicle.

As discussed above, the control of the vehicle may be controlled according to a movement profile and the movement profile may vary based on one or more characteristics determined for the item to be conveyed by the vehicle. It should be understood that the system may store a number of movement profiles, each of which controls the movement of the vehicle along the track according to different parameters. Each movement profile may correlate to one or more characteristics of a particular item. In this way, a variety of items having one or more shared characteristic may share the same movement profile. For instance, all fragile non-round items may all share the same movement profile and all fragile round or cylindrical items may all share the same movement profile.

In this way, the system can dynamically control the movement of each vehicle based on one or more characteristic determined for each item being carried by each vehicle. The characteristic can be determined by either directly detecting the characteristic (scanning, weighing, measuring etc.) or the characteristic(s) may be stored in a central database and the characteristic(s) are determined by identifying the item, such as by a product code. In addition to or instead of storing information about the characteristics for an item, the database may simply include data that identifies the movement profile to be used for an item. In such an instance, the system or operator scans an item to detect a product identification characteristic (such as a bar code or other identifying information). The vehicle movement profile is identified in the central base for the item so that the system retrieves the vehicle movement profile data from the central database after the item is identified.

The system can control the movement of the vehicle based on detected or determined information about the item being conveyed on the vehicle. Additionally, the destination of the vehicle may be varied based on one or more characteristic(s) of an item. For instance, information regarding the physical characteristics of various items may be stored in a central data base. By scanning an item for a product identification code the system can retrieve the data regarding the physical characteristics of the item from the central data base. This data is the expected physical characteristics for the item. For example, based on the data stored for a product identification code, the item may be expected to be 5" long, 3" wide and weigh 8 ounces. If the scanning station 80 measures the item to be 8" long and/or weigh 16 ounces, the system may modify the destination for the item. Specifically, based on the scanned product code the system may direct the vehicle to deliver the item to bin "X". However, when the system detects a physical characteristic that does not match the expected characteristic the system may alter the destination bin. In the example above, if the item is scanned and weigh 16 ounces, the system may deliver the item to bin "y", which may be an alternate larger bin or may be an outsort or reject bin for receiving items that vary from the expected physical characteristic.

The system may also control how an item is discharged or delivered at an output bin 190 based on the determined or detected physical characteristics of an item. If an item is fragile, the system may control the vehicle so that the conveyor belts rotate more slowly to discharge the item into the output bin more slowly. Additionally or alternatively, the position of the vehicle relative to the output bin may be varied based on the detected or determined characteristic. For example, if an item is fragile, the system may stop the vehicle lower relative to the bin so that the item is closer to the bottom of the bin and therefore has less of a vertical fall when the item is discharged into the bin.

When multiple items are to be delivered to the same output bin 190, the system may control the position of the vehicle 400 relative to the output bin 190 to reduce the distance that the items must fall when being discharged and to reduce the likelihood of the items causing a jam as the items stack on top of one another. The control of the position of the vehicle during delivery may be varied depending on the detected or determined characteristic(s) of one or more of the items being sorted to the delivery bin. When multiple items are to be delivered to a single bin, the system may divide the single output bin into three virtual sort destinations. The system then sorts the three items to the three virtual sort locations. For instance, the output bin 190 may be segmented into three virtual sort locations: location 1, location 2, and location 3. In Fig. 10, the single output bin is divided into three virtual locations having equal height.

However, the size of each virtual location may be varied based on one or more characteristic determined or detected for an item. Additionally, the virtual locations can be prioritized based on the determined or detected characteristic(s) of the items. For instance, if a plurality of items are to be delivered to an output bin and one of the items is fragile and one of the items is heavy and/or dense, the system may prioritize the virtual locations by prioritizing the heavy item to be delivered into the bin first and the fragile item is delivered into the bin second to minimize the likelihood of damage. In order to prioritize the order of delivery, the system may control the flow of vehicles to stage or delay the vehicle transporting the fragile item.

Similarly, rather than virtually split a single output bin into a plurality of sort locations, the system may virtually merge a plurality of bins into a single virtual bin based on the characteristics determined or detected for multiple items in an order. For instance, if multiple items are to be delivered to a single output bin, but the physical attributes of the different items dictates the order in which the items should be placed into the bin, the system may deliver the items to two or more bins (preferably adjacent bins). The items are then sorted to the different bins. Returning again to the example of a first item that is fragile and a second item that is heavy, when the system detects or determines these features, the system may dynamically reassign the delivery of the items to two separate output bins rather than a single bin if the fragile item is delivered to the output bin before the vehicle with the second item reaches the output bin. After the two items are delivered to two separate bins, the system provides a signal to the operator indicating that the items in the two separate bins should be withdrawn together and treated as a single order rather than being two separate orders.

When an output bin is separated into multiple sort locations as shown in Fig. 10, the system may control the operation of the vehicles to vary the position of the vehicle relative to the output bin. For instance, referring to Fig. 10, when the vehicle carrying the first item to the output bin arrives at the output bin, the system controls the vehicle to advance the vehicle into alignment with the lowest location for the output bin (e.g. Location 1 in Fig. 10) and the item is ejected into the bin so that the first item is on the bottom of the bin. The vehicle carrying the second item to be delivered to the output bin is then advanced so that the vehicle is aligned with the next lowest location of the output bin (i.e. Location 2) and the vehicle ejects the item into the bin so that the second item is placed onto the first item. Finally, the vehicle carrying the third item to be delivered to the output bin is then advanced so that the vehicle is aligned with the highest location of the output bin (i.e. Location 3) so that the third item is ejected on the first and second items.

As shown in Fig. 10, the rear wall of the output bin 190 may be open so that the vehicles can discharge items through the back of the output bin at varying heights along the height of the output bin. However, it should be appreciated that rather than having an open back wall, the back wall may be displaceable or collapsible to allow the vehicles to stop at varying positions along the height of the output bin and discharge items into the bin.

As described above, various parameters of how an item is delivered to an output bin may be varied based on the physical characteristic(s) determined or detected for an item. Additionally, the system may include additional elements that are optionally used during delivery based on the determined or detected characteristics for the items. For example, the vehicles may include a separate extendable belt or the conveyor belts 406 may be mounted onto a carriage that can be displaced relative to the wheels of the vehicle so that the conveyor belts can extend or telescope outwardly toward the output bin. Specifically, the conveyor belts may extend into the output bin and the conveyor belts can the rotate forwardly to discharge the belt into the output bin. Be extending the conveyor belts into the output bin the item drops less when it is delivered into the output bin. Additionally, the conveyor belt may be controlled so that the conveyor belt does not start until the conveyor belt is completely extended into the output bin. The conveyor belt is rotated to discharge the item. While the conveyor belt is rotating, the conveyor belt is retracted toward the vehicle. The simultaneous operation of discharging the item while withdrawing the belt drops the item more gently into the output bin.

Alternatively, rather than utilizing an extendable conveyor belt, the system may selectively utilize a chute at the output bin in response to the detection or determination of a physical characteristic of an item. Specifically, in response to detection or determination of an item having a select characteristic, the system may advance the vehicle to a particular output bin. A chute may be mounted on the rack and the vehicle may drive the chute so that the item is discharged down the chute into the output bin.

It will be recognized by those skilled in the art that changes or modifications may be made to the above-described embodiments without departing from the broad inventive concepts of the invention. For instance, in the foregoing discussion the system is described as a series of vehicles guided by a track. However, it should be understood that the system need not include a track. For example, the vehicles may travel along the ground rather than traveling along a track. The vehicles may be guided along the ground by one or more sensors and/or a controller. Optionally, the vehicles may be guided in response to signals from other vehicles and/or from a central controller, such as a computer that monitors each of the vehicles and controls movement of the vehicles to prevent the vehicles from colliding with one another. Additionally, the central controller may provide signals to direct each vehicle along a path to a storage location or transfer location.

In addition to a system in which the vehicles move along the ground without a track, the system may incorporate a guidance assembly that includes one or more rails or other physical guides that contact a mechanism on the vehicle to direct the vehicle along a path. For instance, the vehicles may each include one or more contact elements such as wheels, rollers, guide tabs, pins or other elements that may engage the guidance assembly. The guidance assembly mail be a linear element such as a straight rail or it may be a curved element. The guidance assembly may curve within a horizontal plane so that the rail stays within a plane or the guide may curve vertically so that the rail is within a single plane. The guidance assembly may include a plurality of guides or rails vertically spaced from one another so that the vehicles may move horizontally at a plurality of vertical levels. The guide may also include an elevator for moving the vehicles between the vertically spaced rails.

As can be seen from the above, the system may be incorporated into a variety of systems that use physical guide mechanisms or guide the vehicles along open areas by directing the path to guide the vehicles to storage locations or transfer locations. As discussed above, the movement of each vehicle may be controlled in response to a determination of one or more physical characteristics of the item carried by each respective vehicle.

The systems and methods described herein may be implemented in software, hardware, or a combination thereof, in different embodiments. In addition, the order of methods may be changed, and various elements may be added, reordered, combined, omitted or otherwise modified. All examples described herein are presented in a non-limiting manner. Various modifications and changes may be made as would be obvious to a person skilled in the art having benefit of this disclosure. Realizations in accordance with embodiments have been described in the context of particular embodiments. These embodiments are meant to be illustrative and not limiting. Many variations, modifications, additions, and improvements are possible. Accordingly, plural instances may be provided for components described herein as a single instance.

Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

It should therefore be understood that this invention is not limited to the particular embodiments described herein, but is intended to include all changes and modifications that are within the scope of the invention as set forth in the claims.

## Claims

1. An apparatus for sorting a plurality of items, comprising:
a plurality of sort destinations;
a plurality of delivery vehicles (400, 604) for delivering items to the sort destinations, wherein each vehicle comprises:
a surface for supporting items to be delivered; and
an edge-detection assembly (100, 402, 404) for detecting an edge of an item when the item is conveyed onto or discharged from the vehicle, wherein the edge-detection assembly comprises:
an emitter (104, 304) for emitting a beam of light toward the surface, wherein the emitter is positioned below the surface so that the beam of light is projected transverse the surface; and
a plurality of detectors (106, 306) for detecting the beam of light, wherein an object on the surface of the vehicle affects the beam of light received by the detectors;
a controller for controlling the loading of an item onto one of the vehicles or the discharge of an item from the vehicle based on signals from the edge- detection assembly.

2. The apparatus of claim 1, comprising a track for guiding the vehicles to the sort destinations.

3. The apparatus of claim 1, wherein the plurality of detectors comprises a linear array of aligned detectors.

4. The apparatus of any of claims 1-3, comprising a mirror (116) wherein the emitter emits the beam of light toward the mirror and the mirror reflects the beam of light toward the plurality of detectors.

5. The apparatus of claim 4, wherein the emitter and the plurality of detectors are mounted on a first support element and the mirror is mounted on a second support element spaced apart from the first support element.

6. The apparatus of any of claims 1-5, wherein the edge-detection assembly is configured to detect elements on the surface having a thickness of as thin as 3.0 mm, as thin as 2.0 mm, as thin as 1.00 mm, as thin as 0.5 mm, or as thin as 0.05 mm.

7. The apparatus of any of claims 1-6, wherein the emitter comprises a laser.

8. The apparatus of any of claims 1-7, wherein the emitter comprises a lens for dispersing the light to create a beam of light having sufficient height to impinge on each of the detectors.

9. The apparatus of any of claims 1-8, wherein the edge-detection assembly is mounted adjacent an end of the surface of the vehicle.

10. The apparatus of claim 5, wherein the first support element is mounted adjacent a first edge of the surface and the second support element is mounted adjacent a second edge of the surface so that the first and second support are on opposite sides of the vehicle.

11. The apparatus of any of claims 1-10, wherein the detectors are photodiodes or photo transistors.

12. The apparatus of any of claims 1-11 wherein the controller is adapted to register a first change in logic state when a leading surface of an object moving in a first direction crosses an object detection plane formed by the beam of light.

13. The apparatus of claim 12, wherein the controller is further adapted to register a second change in logic state when a trailing surface of an object moving in the first direction crosses the object detection plane.

14. The apparatus of any one of claims 1-13, comprising a lens system dimensioned and arranged to receive optical energy from the emitter and to collimate the received optical energy into a line aligned with the plurality of detectors, wherein optical energy of the line is received by each detector of the plurality of detectors unless an amount of optical energy above a sensitivity threshold is absorbed, reflected or refracted by an object disposed on the surface.

## Patentansprüche

1. Vorrichtung zum Sortieren einer Vielzahl von Artikeln, umfassend:
eine Vielzahl von Sortierzielen;
eine Vielzahl von Lieferfahrzeugen (400, 604) zum Liefern von Artikeln an die Sortierziele, wobei jedes Fahrzeug Folgendes umfasst:
eine Oberfläche zum Tragen von auszuliefernden Artikeln; und
eine Kantenerfassungsbaugruppe (100, 402, 404) zum Erfassen einer Kante eines Artikels, wenn der Artikel auf das Fahrzeug befördert oder von diesem entladen wird, wobei die Kantenerfassungsbaugruppe Folgendes umfasst:
einen Emitter (104, 304) zum Emittieren eines Lichtstrahls in Richtung der Oberfläche, wobei der Emitter unterhalb der Oberfläche derart positioniert ist, dass der Lichtstrahl quer zu der Oberfläche projiziert wird; und
eine Vielzahl von Detektoren (106, 306) zum Erfassen des Lichtstrahls, wobei ein Objekt auf der Oberfläche des Fahrzeugs den durch die Detektoren empfangenen Lichtstrahl beeinflusst;
eine Steuervorrichtung zum Steuern des Ladens eines Artikels auf eines der Fahrzeuge oder des Entladens eines Artikels aus dem Fahrzeug basierend auf Signalen von der Kantenerfassungsbaugruppe.

2. Vorrichtung nach Anspruch 1, die eine Spur zum Führen der Fahrzeuge zu den Sortierzielen umfasst.

3. Vorrichtung nach Anspruch 1, wobei die Vielzahl von Detektoren ein lineares Array von ausgerichteten Detektoren umfasst.

4. Vorrichtung nach einem der Ansprüche 1-3, die einen Spiegel (116) umfasst, wobei der Emitter den Lichtstrahl in Richtung des Spiegels emittiert und der Spiegel den Lichtstrahl in Richtung der Vielzahl von Detektoren reflektiert.

5. Vorrichtung nach Anspruch 4, wobei der Emitter und die Vielzahl von Detektoren auf einem ersten Trägerelement montiert sind und der Spiegel auf einem zweiten Trägerelement montiert ist, das von dem ersten Trägerelement beabstandet ist.

6. Vorrichtung nach einem der Ansprüche 1-5, wobei die Kantenerfassungsbaugruppe konfiguriert ist, um Elemente auf der Oberfläche mit einer Dicke von so dünn wie 3,0 mm, so dünn wie 2,0 mm, so dünn wie 1,00 mm, so dünn wie 0,5 mm oder so dünn wie 0,05 mm zu erfassen.

7. Vorrichtung nach einem der Ansprüche 1-6, wobei der Emitter einen Laser umfasst.

8. Vorrichtung nach einem der Ansprüche 1-7, wobei der Emitter eine Linse zum Streuen des Lichts umfasst, um einen Lichtstrahl zu schaffen, der ausreichend hoch ist, um auf jeden der Detektoren aufzutreffen.

9. Vorrichtung nach einem der Ansprüche 1-8, wobei die Kantenerfassungsbaugruppe angrenzend an ein Ende der Oberfläche des Fahrzeugs montiert ist.

10. Vorrichtung nach Anspruch 5, wobei das erste Trägerelement angrenzend an eine erste Kante der Oberfläche montiert ist und das zweite Trägerelement angrenzend an eine zweite Kante der Oberfläche montiert ist, sodass sich der erste und der zweite Träger auf entgegengesetzten Seiten des Fahrzeugs befinden.

11. Vorrichtung nach einem der Ansprüche 1-10, wobei die Detektoren Fotodioden oder Fototransistoren sind.

12. Vorrichtung nach einem der Ansprüche 1-11, wobei die Steuervorrichtung angepasst ist, um eine erste Änderung des logischen Zustands zu registrieren, wenn eine Vorderfläche eines Objekts, das sich in einer ersten Richtung bewegt, eine durch den Lichtstrahl gebildete Objekterfassungsebene kreuzt.

13. Vorrichtung nach Anspruch 12, wobei die Steuervorrichtung ferner angepasst ist, um eine zweite Änderung des logischen Zustands zu registrieren, wenn eine hintere Oberfläche eines Objekts, das sich in der ersten Richtung bewegt, die Objekterfassungsebene kreuzt.

14. Vorrichtung nach einem der Ansprüche 1-13, die ein Linsensystem umfasst, das dimensioniert und angeordnet ist, um optische Energie von dem Emitter zu empfangen und die empfangene optische Energie in eine Linie zu kollimieren, die mit der Vielzahl von Detektoren ausgerichtet ist, wobei optische Energie der Linie durch jeden Detektor der Vielzahl von Detektoren empfangen wird, sofern nicht eine Menge an optischer Energie oberhalb einer Empfindlichkeitsschwelle von einem auf der Oberfläche angeordneten Objekt absorbiert, reflektiert oder gebrochen wird.

## Revendications

1. Dispositif pour le tri d'une pluralité d'objets, comprenant :
une pluralité de destinations de tri ;
une pluralité de véhicules de livraison (400, 604) pour livrer des objets aux destinations de tri, dans lequel chaque véhicule comprend :
une surface pour supporter les objets à livrer ; et
un ensemble de détection de bord (100, 402, 404) pour détecter un bord d'un objet lorsque l'objet est transporté sur le véhicule ou déchargé de celui-ci, dans lequel l'ensemble de détection de bord comprend :
un émetteur (104, 304) pour émettre un faisceau de lumière vers la surface, dans lequel l'émetteur est positionné sous la surface de sorte que le faisceau de lumière est projeté transversalement à la surface ; et
une pluralité de détecteurs (106, 306) pour détecter le faisceau de lumière, dans lequel un objet sur la surface du véhicule affecte le faisceau de lumière reçu par les détecteurs ;
un dispositif de commande pour commander le chargement d'un objet sur l'un des véhicules ou le déchargement d'un objet du véhicule sur la base de signaux provenant de l'ensemble de détection de bord.

2. Dispositif selon la revendication 1, comprenant une voie de guidage des véhicules vers les destinations de tri.

3. Dispositif selon la revendication 1, dans lequel la pluralité de détecteurs comprend un réseau linéaire de détecteurs alignés.

4. Dispositif selon l'une quelconque des revendications 1 à 3, comprenant un miroir (116) dans lequel l'émetteur émet le faisceau de lumière vers le miroir et le miroir réfléchit le faisceau de lumière vers la pluralité de détecteurs.

5. Dispositif selon la revendication 4, dans lequel l'émetteur et la pluralité de détecteurs sont montés sur un premier élément de support et le miroir est monté sur un second élément de support espacé du premier élément de support.

6. Dispositif selon l'une quelconque des revendications 1 à 5, dans lequel l'ensemble de détection de bord est conçu pour détecter des éléments sur la surface ayant une épaisseur aussi fine que 3,0 mm, aussi fine que 2,0 mm, aussi fine que 1,00 mm, aussi fine 0,5 mm ou aussi fine que 0,05 mm.

7. Dispositif selon l'une quelconque des revendications 1 à 6, dans lequel l'émetteur comprend un laser.

8. Dispositif selon l'une quelconque des revendications 1 à 7, dans lequel l'émetteur comprend une lentille pour disperser la lumière afin de créer un faisceau de lumière ayant une hauteur suffisante pour frapper chacun des détecteurs.

9. Dispositif selon l'une quelconque des revendications 1 à 8, dans lequel l'ensemble de détection de bord est monté de manière adjacente à une extrémité de la surface du véhicule.

10. Dispositif selon la revendication 5, dans lequel le premier élément de support est monté de manière adjacente à un premier bord de la surface et le second élément de support est monté de manière adjacente à un second bord de la surface de sorte que le premier et le second support sont sur des côtés opposés du véhicule.

11. Dispositif selon l'une quelconque des revendications 1 à 10, dans lequel les détecteurs sont des photodiodes ou des phototransistors.

12. Dispositif selon l'une quelconque des revendications 1 à 11, dans lequel le dispositif de commande est adapté pour enregistrer un premier changement d'état logique lorsqu'une surface avant d'un objet se déplaçant dans une première direction croise un plan de détection d'objet formé par le faisceau de lumière.

13. Dispositif selon la revendication 12, dans lequel le dispositif de commande est en outre adapté pour enregistrer un second changement d'état logique lorsqu'une surface arrière d'un objet se déplaçant dans la première direction croise le plan de détection d'objet.

14. Dispositif selon l'une quelconque des revendications 1 à 13, comprenant un système de lentilles dimensionné et agencé pour recevoir l'énergie optique de l'émetteur et pour collimater l'énergie optique reçue en une ligne alignée avec la pluralité de détecteurs, dans lequel l'énergie optique de la ligne est reçue par chaque détecteur de la pluralité de détecteurs à moins qu'une quantité d'énergie optique supérieure à un seuil de sensibilité ne soit absorbée, réfléchie ou réfractée par un objet disposé sur la surface.
